# EUROPÄISCHE PATENTANMELDUNG

(11) **EP 3 943 319 A1**
(43) Veröffentlichungstag der Anmeldung: **26.01.2022**
(21) Anmeldenummer: 21184401.4
(22) Anmeldetag: 08.07.2021
(51) Int. Cl.: B60C 19/12, B29C 73/22

(54) **FAHRZEUGREIFEN MIT EINEM GESCHWINDIGKEITSINDEX VON L ODER GERINGER**

(30) Priorität: 24.07.2020 DE 102020209335
(71) Anmelder: Continental Reifen Deutschland GmbH, 30165 Hannover (DE)
(72) Erfinder: Doroshenko, Mikheil, 30419 Hannover (DE); Tyburski, Andreas, 30419 Hannover (DE); Nascimento, Murilo, 30419 Hannover (DE); Lange, Harm-Hendrik, 30419 Hannover (DE); Goh, Seh-Kai, 30419 Hannover (DE); Martins, Jose Eduardo, 30419 Hannover (DE)
(74) Vertreter: Continental Corporation

(57) **Zusammenfassung**

Die Erfindung betrifft einen Fahrzeugreifen mit einem Geschwindigkeitsindex von L oder geringer, wobei bei einem Index von L die zugelassene Höchstgeschwindigkeit 120 km/h beträgt, und wobei solche mit einem geringeren Index eine zugelassene Höchstgeschwindigkeit von weniger als 120 km/h aufweisen.

Der erfindungsgemäße Fahrzeugreifen weist wenigstens eine Dichtmittellage wenigstens auf der dem Laufstreifen gegenüberliegenden Innenfläche auf, wobei das Dichtmittel der Dichtmittellage ein selbsttätig abdichtendes Reifendichtmittel ist.

## Beschreibung

Die Erfindung betrifft einen Fahrzeugreifen mit einem Geschwindigkeitsindex von L oder geringer, wobei bei einem Index von L die zugelassene Höchstgeschwindigkeit 120 km/h beträgt, und wobei solche mit einem geringeren Index eine zugelassene Höchstgeschwindigkeit von weniger als 120 km/h aufweisen, wobei sich die Zuordnung der zugelassenen Höchstgeschwindigkeit zum jeweiligen Index gemäß des "ETRTO Standards Manual" 2018 für Europa bestimmt.

Fahrzeugreifen eingangs genannter Art finden beispielsweise in der Landwirtschaft und auf Baustellen Anwendung. Dort sind sie besonders hohen Anforderungen hinsichtlich der Haltbarkeit ausgesetzt: Zum einen sind sie aufgrund des wechselhaften Untergrundes, wie z. B. Geröll oder Gemisch aus weicher Erde und spitzen Gegenständen, unmittelbar verletzungsanfällig. Zum anderen tragen diese Reifen teilweise gleichzeitig eine große Last, was das Eindringen von Steinen oder anderen spitzen Gegenständen noch begünstigt. Im ungünstigsten Fall kommt es hierbei nicht nur zu einer äußeren Schädigung des Laufstreifen, sondern auch zu einem Pannenfall mit resultierendem Druckverlust. Derzeit müssen die Fahrzeuge im Pannenfall ggf. vom unmittelbaren Einsatzort wegbewegt und der Reifen ausgewechselt werden.

Der vorliegenden Erfindung liegt daher die Aufgabe zugrunde einen Fahrzeugreifen eingangs genannter Art, bereitzustellen, der im Pannenfall nicht sofort gewechselt werden muss, also im Pannenfall keinen Druckverlust erfährt.

Gelöst wird die Aufgabe dadurch, dass der Fahrzeugreifen wenigstens eine Dichtmittellage wenigstens auf der dem Laufstreifen gegenüberliegenden Innenfläche aufweist, wobei das Dichtmittel der Dichtmittellage ein selbsttätig abdichtendes Reifendichtmittel ist.

Durch das selbsttätig abdichtende Reifendichtmittel wird die Einstichstelle im Pannenfall selbsttätig durch das Dichtmittel verschlossen und abgedichtet. Hierdurch wird ein im Pannenfall bisher nötiges Austauschen oder ein Ausfall des Reifens am Einsatzort vermieden.

Der Fahrzeugreifen weist einen Geschwindigkeitsindex (*engl.* "speed symbol") von L oder geringer auf, wobei bei einem Index von L die zugelassene Höchstgeschwindigkeit 120 km/h beträgt, und wobei solche mit einem geringeren Index eine zugelassene Höchstgeschwindigkeit von weniger als 120 km/h aufweisen. Die Zuordnung der zugelassenen Höchstgeschwindigkeit zum jeweiligen Index ist weltweit einheitlich und insbesondere gemäß des "ETRTO Standards Manual" 2018, Seite G.6 für Europa bestimmt. Aus dem "ETRTO Standards Manual" 2020 sowie den entsprechenden Veröffentlichungen in anderen Ländern, wie z.B. "The Tire and Rim Association" in den USA oder "Japan Automobile Tyre Manufacturers Association" in Japan ergeben sich die gleichen Indices bzw. Zuordnungen von Indizes zu zugelassener Höchstgeschwindigkeit.

Dem Fachmann ist bekannt, welcher Fahrzeugreifen einen Geschwindigkeitsindex von L oder geringer aufweist, da jedem Fahrzeugreifen ein solcher Index zugeordnet wird.

Bei dem Fahrzeugreifen mit einem Geschwindigkeitsindex von L oder geringer kann es sich um jeden Fahrzeugreifen handeln, der nach der genannten Definition darunter fällt.

Beispielsweise und insbesondere handelt es sich um einen Landwirtschaftsreifen oder Baustellenreifen, wie einen Reifen für Ackerschlepper, selbstfahrende Erntemaschinen, Anhänger, Radlader oder Bagger.

Gemäß einer Ausführungsform der Erfindung weist der erfindungsgemäße Fahrzeugreifen einen Geschwindigkeitsindex von D auf, und damit eine zugelassene Höchstgeschwindigkeit von 65 km/h.

Der erfindungsgemäße Reifen ist insbesondere so ausgelegt ist, dass er mit einem Innendruck von 0,6 bis 8 bar, bevorzugt 1,6 bis 3,2 bar, betrieben werden kann.

Die Dichtmittellage weist bevorzugt in radialer Richtung eine Schichtdicke von 5 bis 35 mm, bevorzugt 8 bis 20 mm, auf. Die Schichtdicke wird in radialer Richtung (rR) senkrecht zur axialen Richtung (aR) des Fahrzeugreifens gemessen.

Diese Schichtdicken sind somit größer als die in Standard-PKW-Reifen aufweisend ein Dichtmittel.

Das Dichtmittel in den genannten Schichtdicken aufzutragen hat den Vorteil, dass ausreichend Dichtmittel für die besondere Art von Reifen, insbesondere Landwirtschaftsreifen oder Baustellenreifen, zur Verfügung steht und somit im Pannenfall die Haltbarkeit ausreichend gesichert ist.

Die gegenüber Standard-PKW-Reifen erhöhte Schichtdicken sind insbesondere in den erfindungsgemäßen Reifen mit einem Geschwindigkeitsindex von L oder geringer verwendbar. Bei Reifen mit einem höheren Geschwindigkeitsindex besteht die Gefahr, dass das Dichtmittel im Fahrbetrieb unerwünscht fließt und zu einer Unförmigkeit des Reifens und somit zu Umwucht- und Balance-Problemen führt.

Das zusätzliche Material des Dichtmittels erhöht das Gewicht des Reifens, wodurch der Kraftstoffverbrauch verschlechtert wird. Für den üblichen Einsatz auf dem Feld oder der Baustelle ist der geringfügig erhöhte Kraftstoffverbrauch jedoch in gewissem Maße nicht so kritisch, aber auch nicht ganz zu vernachlässigen, da das Fahrzeug zudem über Straßen auch erst zum Einsatzort gelangen muss. Mit den genannten Schichtdicken wird daher ein optimaler Kompromiss aus Haltbarkeit und Kraftstoffverbrauch erzielt.

Ferner können radial innerhalb der Dichtmittelage eine oder mehrere weitere Lagen, wie Beschichtungen zur Herabsetzung der Klebrigkeit des Dichtmittels oder Textillagen oder ähnliche zur Fixierung des Dichtmittels angeordnet sein, wie beispielsweise in der EP 3498494 A1 offenbart.

Bei dem selbsttätig abdichtenden Reifendichtmittel - kurz "Dichtmittel" - kann es sich um alle geeigneten und dem Fachmann bekannten Dichtmittelzusammensetzungen handeln, wie beispielsweise auf Silikonbasis, oder auf Basis von Polyurethan oder basierend auf der Vernetzung eines Kautschuks und/oder eines Polyolefins.

Gemäß einer vorteilhaften und beispielsweisen Ausführungsform enthält das Dichtmittel wenigstens einen Kautschuk. Die Menge an Kautschuken beträgt bevorzugt 5 bis 30 Gew.-%, besonders bevorzugt 9 bis 15 Gew.-%.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk.

Diese Kautschuktypen sind für die Verarbeitungstemperaturen bei der Herstellung des Dichtmittels und später bei der Anwendung, insbesondere im Fahrzeugluftreifen, besonders gut geeignet.

Gemäß beispielhafter Ausführungsformen kann das Dichtmittel insbesondere natürliches und/oder synthetisches Polyisopren, bevorzugt natürliches Polyisopren, enthalten.

Hierbei kann beispielsweise fester Naturkautschuk (NR) mit flüssigem Polyisopren in Kombination verwendet werden.

Beispielsweise kann das Dichtmittel Naturkautschuk und Styrol-Butadien-Kautschuk (SBR), beispielsweise ESBR (emulsionspolymerisierten Styrol-Butadien-Kautschuk) enthalten. Die Vernetzung kann auf Peroxiden basieren und/oder auf einer Schwefelvernetzung. Beispielsweise kann Schwefel in Kombination mit peroxidischen Agenzien, wie beispielsweise "VAROX-Organic-Peroxide-Crosslinking-Agents", der Firma Vanderbilt Chemicals, LLC verwendet werden. Das Verhältnis von NR zu ESBR beträgt beispielsweise 30 bis 40 zu 60 bis 70 Gew.-%.

Gemäß weiteren beispielhaften Ausführungsformen handelt es sich um ein Silikonbasiertes Dichtmittel.

Gemäß einer vorteilhaften und beispielsweisen Ausführungsform basiert das Dichtmittel auf der Vernetzung eines Kautschuks und/oder Polyolefins. Für den Kautschuk gelten die obigen Ausführungen.

Dem Fachmann ist klar, dass sämtliche genannten Bestandteile im vernetzten Dichtmittel zumindest teilweise in chemisch veränderter Form, insbesondere als Derivate, vorliegen.

Gemäß vorteilhafter Ausführungsformen der Erfindung enthält das Dichtmittel wenigstens einen Butylkautschuk (IIR). Butylkautschuk eignet sich besonders gut, da er eine vergleichsweise hohe Luftdichtigkeit aufweist.

Gemäß einer besonders vorteilhaften Ausführungsform der Erfindung enthält das selbsttätig abdichtende Reifendichtmittel 20 bis 80 Gew.-%, bevorzugt 20 bis 75 Gew.-%, wiederum bevorzugt 40 bis 75 Gew.-%, besonders bevorzugt 50 bis 75 Gew.-%, wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Unter "Polyolefinen" werden insbesondere solche Polyalkene verstanden, die durch Polymerisation von insbesondere unverzweigten Alkenen erhalten werden, wie Polyethylene, Polypropylene, Polybutene und Polyisobutene.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Bevorzugt enthält das Dichtmittel 0,1 bis 3 Gew.-%, besonders bevorzugt 0,1 bis 1,5 Gew.-%, ganz besonders bevorzugt 0,4 bis 0,8 Gew.-% wenigstens eines Vernetzers.

Bevorzugt enthält das Dichtmittel 0,1 bis 3 Gew.-%, besonders bevorzugt 0,2 bis 1,5 Gew.-%, ganz besonders bevorzugt 0,5 bis 1,2 Gew.-% wenigstens eines Vernetzungsinitiators.

Das Dichtmittel kann ferner weitere Bestandteile enthalten, wie insbesondere weitere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

Gemäß einer bevorzugten Ausführungsform der Erfindung enthält das Dichtmittel zudem wenigstens einen Füllstoff, insbesondere wenigstens einen aktiven Füllstoff.

Bei dem Füllstoff kann es sich um alle dem Fachmann bekannten Füllstoffe handeln, wie insbesondere verstärkende Füllstoffe, wie Industrieruß und/oder Kieselsäure, wobei insbesondere gefällte Kieselsäuren gemeint und bevorzugt sind, die als Füllstoffe für Reifenkautschukmischungen bekannt sind.

Ferner sind weitere verstärkende und nicht verstärkende Füllstoffe, insbesondere Siliziumoxid basierte Füllstoffe, wie Silikate oder Sand, denkbar sowie ggf. verstärkende Füllstoffe wie z.B. Graphit und Graphene und sogenannte "carbon-silica dual-phase filler".

Gemäß einer bevorzugten Ausführungsform der Erfindung umfasst der Füllstoff wenigstens einen Industrieruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Gemäß einer weiteren bevorzugten Ausführungsform der Erfindung wird ein Ruß des Typs N326 verwendet.

Es ist auch ein Gemisch von zwei oder mehreren Rußen denkbar.

Gemäß einer weiteren bevorzugten Ausführungsform der Erfindung umfasst der Füllstoff wenigstens eine Kieselsäure (engl. "silica").

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten Füllstoffe denkbar und bevorzugt, wie insbesondere wenigstens ein Industrieruß in Kombination mit wenigstens einer Kieselsäure, wobei sich ebenfalls die genannten Vorteile ergeben.

Das Dichtmittel enthält bevorzugt 0,5 bis 40 Gew.-%, besonders bevorzugt 0,5 bis 30 Gew.-%, ganz besonders bevorzugt 1,0 bis 30 Gew.-% an Füllstoffen, welche zudem bevorzugt aus den oben genannten ausgewählt sind.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein.

Bei den Monomeren des Homo- oder Copolymers kann es sich um alle dem Fachmann bekannten Monomere von Kohlenwasserstoffharzen handeln, wie Aromaten, insbesondere C₉-Monomere, oder aliphatische Monomere, insbesondere aliphatische Cs-Monomere. Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus Cs-Monomeren aufgebaut ist und dem Fachmann als sogenanntes C₅-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen Cs-Monomeren kann es sich um Monomere der Cs-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel 2 bis 20 Gew.-%, bevorzugt 2 bis 10 Gew.-%, besonders bevorzugt 2 bis 5 Gew.-%, wiederum bevorzugt 2 bis 3,5 Gew.-%, wenigstens Klebrigmachers.

Gemäß vorteilhafter Ausführungsformen der Erfindung enthält das Dichtmittel 2 bis 20 Gew.-% wenigstens eines Kohlenwasserstoffharzes als Klebrigmacher. Bevorzugt beträgt die Menge des wenigstens einen Kohlenwasserstoffharzes 2 bis 10 Gew.-% besonders bevorzugt 2 bis 5 Gew.-%, wiederum bevorzugt 2 bis 3,5 Gew.-%.

Mit derartigen bevorzugten und besonders bevorzugten Mengen an Klebrigmacher bzw. Kohlenwasserstoffharz werden die Klebrigkeit und die Viskosität des Dichtmittels weiter optimiert.

Gemäß beispielhafter vorteilhafter Ausführungsformen der Erfindung enthält das Dichtmittel folgende Bestandteile in folgenden Mengen:
- 50 bis 75 Gew.-% wenigstes eines Polyolefins, bevorzugt wenigstens eines Polybutens, und
- 2,0 bis 3,5 Gew.-% wenigstens eines Klebrigmachers und
- 9,0 bis 15 Gew.-% wenigstens eines Kautschuks und
- 1,0 bis 30 Gew.-% wenigstens eines Füllstoffs und
- 0,4 bis 0,8 Gew.-% wenigstens eines Vernetzers und
- 0,5 bis 1,2 Gew.-% wenigstens eines Vernetzungsinitiators.

Sämtliche Angaben in Gew.-% beziehen sich jeweils auf die Gesamtmenge an Dichtmittel.

Die Dichtmittelzusammensetzung kann durch bekannte Verfahren und Vorrichtungen hergestellt werden, insbesondere durch intensives Mischen in einem Mischer oder Extruder, insbesondere einem Doppelschneckenextruder.

Die Dichtmittelzusammensetzung kann ferner durch bekannte Verfahren und Vorrichtungen auf die dem Laufstreifen gegenüberliegende Innenfläche des Reifens aufgetragen werden.

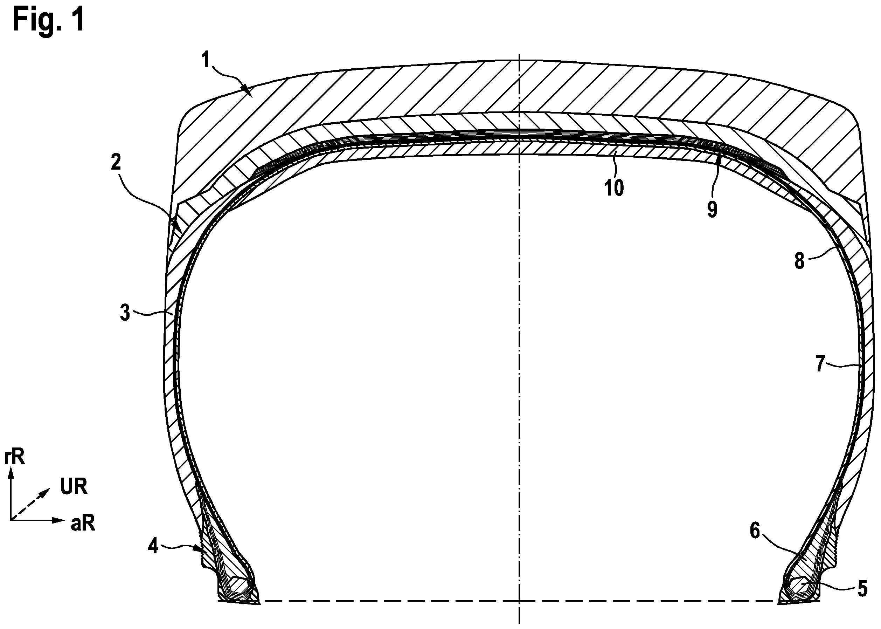

Weitere Einzelheiten der Erfindung werden anhand der Figur 1, die ein schematisches Ausführungsbeispiel darstellt, näher erläutert.

Bevorzugte Bestandteile, aus welchen sich der erfindungsgemäße Fahrzeugluftreifen zusammensetzt, sind ein profilierter Laufstreifen 1, eine Laufstreifen-Unterplatte 2, ein Gürtelpaket 9, Seitenwände 3, Hornprofile 4, eine Textilkarkasslage 7, welche um die Wulstkerne 5 und Wulstkernprofile 6 von axial innen nach axial außen herumgeführt ist und eine Innenschicht 8.

Die Selbstdichtung des Fahrzeugluftreifens ist durch eine nach der Vulkanisation des Fahrzeugluftreifens nachträglich radial innen wenigstens auf der dem Laufstreifen 1 gegenüberliegenden Innenfläche, und hier auf die Innenschicht 8, umlaufend aufgebrachte Dichtmittellage 10 erhalten. Die Dichtmittellage 10 weist bevorzugt die Breite des Gürtelpakets 9 auf und ist insbesondere in dessen Projektion angeordnet.

Die beschriebene Konstruktion ist zudem eine bevorzugte Konstruktion des erfindungsgemäßen Fahrzeugreifens.

Versuche mit Ackerschlepperreifen mit der Konstruktion wie in Figur 1 dargestellt und oben beschrieben, einem Geschwindigkeitsindex von D (bis zu 65 km/h zugelassener Höchstgeschwindigkeit) in der Dimension 420/85 R28 und einer Schichtdicke der Dichtmittellage (in radialer Richtung) von 15 mm zeigten sehr gute Ergebnisse. So konnten Schäden verursacht durch zylindrische Objekte mit einem Durchmesser von bis zu 15 mm zuverlässig abgedichtet werden. Darüber hinaus ergibt sich Potential für eine zufriedenstellende Abdichtung von Schäden verursacht durch noch größere Objekte (Durchmesser größer als 15 mm) und/oder Objekte mit anderen geometrischen Formen und entsprechend maximaler Breite im Querschnitt.

Das Dichtmittel wies die folgende Zusammensetzung auf:
- 50 bis 75 Gew.-% wenigstes eines Polyolefins, bevorzugt wenigstens eines Polybutens, und
- 2,0 bis 3,5 Gew.-% wenigstens eines Klebrigmachers und
- 9,0 bis 15 Gew.-% wenigstens eines Kautschuks und
- 1,0 bis 30 Gew.-% wenigstens eines Füllstoffs und
- 0,4 bis 0,8 Gew.-% wenigstens eines Vernetzers und
- 0,5 bis 1,2 Gew.-% wenigstens eines Vernetzungsinitiators.

### Bezugszeichenliste (Teil der Beschreibung)

- 1: Laufstreifen
- 2: Laufstreifen-Unterplatte
- 3: Seitenwand
- 4: Hornprofil
- 5: Wulstkern
- 6: Wulstkernprofil
- 7: Textilkarkasslage
- 8: Innenschicht
- 9: Gürtelpaket
- 10: Dichtmittellage
- rR: radiale Richtung
- aR: axiale Richtung
- UR: Umlaufrichtung des Reifens

## Patentansprüche

1. Fahrzeugreifen mit einem Geschwindigkeitsindex von L oder geringer, wobei bei einem Index von L die zugelassene Höchstgeschwindigkeit 120 km/h beträgt, und wobei solche mit einem geringeren Index eine zugelassene Höchstgeschwindigkeit von weniger als 120 km/h aufweisen, wobei sich die Zuordnung der zugelassenen Höchstgeschwindigkeit zum jeweiligen Index gemäß des "ETRTO Standards Manual" 2018 für Europa bestimmt, **dadurch gekennzeichnet, dass** der Fahrzeugreifen wenigstens eine Dichtmittellage (10) wenigstens auf der dem Laufstreifen (1) gegenüberliegenden Innenfläche aufweist, wobei das Dichtmittel der Dichtmittellage ein selbsttätig abdichtendes Reifendichtmittel ist.

2. Fahrzeugreifen nach Anspruch 1, **dadurch gekennzeichnet, dass** es sich um einen Landwirtschaftsreifen oder Baustellenreifen, wie einen Reifen für Ackerschlepper, selbstfahrende Erntemaschinen, Anhänger, Radlader oder Bagger handelt.

3. Fahrzeugreifen nach einem der vorherigen Ansprüche, **dadurch gekennzeichnet, dass** er so ausgelegt ist, dass er mit einem Innendruck von 0,6 bis 8 bar, bevorzugt 1,6 bis 3,2 bar, betrieben werden kann.

4. Fahrzeugreifen nach einem der vorherigen Ansprüche, **dadurch gekennzeichnet, dass** die Dichtmittellage (10) in radialer Richtung eine Schichtdicke von 5 bis 35 mm, bevorzugt 8 bis 20 mm, aufweist.

5. Fahrzeugreifen nach einem der vorherigen Ansprüche, **dadurch gekennzeichnet, dass** das selbsttätig abdichtende Reifendichtmittel wenigstens einen Kautschuk enthält.

6. Fahrzeugreifen nach einem der vorherigen Ansprüche, **dadurch gekennzeichnet, dass** das selbsttätig abdichtende Reifendichtmittel auf der Vernetzung eines Kautschuks und/oder Polyolefins basiert.

7. Fahrzeugreifen nach einem der vorherigen Ansprüche, **dadurch gekennzeichnet, dass** das selbsttätig abdichtende Reifendichtmittel wenigstens ein natürliches und/oder synthetisches Polyisopren enthält.

8. Fahrzeugreifen nach einem der vorherigen Ansprüche, **dadurch gekennzeichnet, dass** das selbsttätig abdichtende Reifendichtmittel wenigstens einen Butylkautschuk enthält.

9. Fahrzeugreifen nach einem der vorherigen Ansprüche, **dadurch gekennzeichnet, dass** das das selbsttätig abdichtende Reifendichtmittel ein Silikonbasiertes Dichtmittel ist.

10. Fahrzeugreifen nach einem der vorherigen Ansprüche, **dadurch gekennzeichnet, dass** das selbsttätig abdichtende Reifendichtmittel wenigstens ein Polyurethan enthält.
